# EUROPEAN PATENT APPLICATION

(11) **EP 1 073 255 A2**
(43) Date of publication of application: **31.01.2001**
(21) Application number: 00202568.2
(22) Date of filing: 17.07.2000
(51) Int. Cl.: H04N 1/21

(54) **Photo albuming with APS**

(30) Priority: 30.07.1999 US 364861
(71) Applicant: EASTMAN KODAK COMPANY, Rochester, New York 14650 (US)
(72) Inventor: Tesavis, Carl J., Eastman Kodak Company, Rochester, New York 14650-2201 (US)
(74) Representative: Lewandowsky, Klaus, Dipl.-Ing.

(57) **Abstract**

A method and system for organizing image data. Film is provided that has a plurality of frames with a plurality of magnetic tracks associated with each frame. Low resolution images are produced from scanning the film and displayed so that an organizational sequence of frames can be selected. After the frames have been selected, the data that identifies the organizational sequence is stored on either the leader or magnetic tracks. Then the film can be processed and the organizational sequence of frames printed.

## Description

The present invention relates to a hybrid traditional and electronic imaging system. The system will allow a user to define albums using low resolution electronic digital images scanned from Advanced Photo System (APS) film and save that relationship data back to the magnetics of the APS film. More particularly, the system will allow for albums, which span multiple APS rolls and provide a manner to quickly find album information on the leader area of the APS film.

In conventional photography, a user exposes photographic film in a camera and conveys (either personally, by mail, or some other delivery service) the exposed film to any convenient processing center. The processing center then processes the film to form hardcopy images (typically in the form of photographic negatives on the original film and/or photographic prints, or photographic positives in the case of reversal processed film). The hardcopy images are then conveyed back to the user (often by the user personally picking them up at the processing center). If a user desires to put the hardcopies in a photoalbum, they typically go through the highly tedious and time consuming effort of determining which hardcopy images are desired, determining where to place them in the album, and sometimes the expense of having it professionally prepared by a photographer. If later it is desired to prepare another album, the same process typically must be repeated. Additionally, if a user desired to give duplicate albums to other persons so much effort and time would go into reproducing prints and assembling the albums that most users would simply not bother with multiple albums.

In the field of film image processing, a process and system have been taught, in U.S. Patent 5,784,149, that enables a user to efficiently utilize time while waiting for the printing and filing. The system captures frame images in a resolution and then stores the data in the image memory. Then the index image is displayed. The frame image is captured in a higher resolution and while the printer is printing the frame image the images are being displayed in accordance with the data stored in the image memory. However, the high resolution image does not have to be stored or transmitted to reproduce the selected pictures and this requires high amounts of digital storage and a fast transmission medium.

In U.S. Patent 5,274,418, an image processing system is taught that creates photoalbums from photographic film via a control means. Control information may be utilized to determine the number, orientation and size of image frames that are reproduced. Additionally, control information may be utilized to determine which image frames are grouped together in the reproducing process. However, the system does not provide users the ability to store data on the magnetic recording layer of APS film. Thus, providing the system with the inability to recover specific information defined by the user.

A talking photoalbum is taught, in U.S. Patent 5,574,519, where images are stored and through an audio subsystem information corresponding to the image can be played back. However, the system for the talking photoalbum is not an electronic imaging system where images can be scanned from film. Thus, providing the user with the tedious and time consuming effort of physically arranging a photoalbum.

A method and apparatus is taught, in U.S. Patent 5,198,907, for automatically locating predefined exposure areas in scanned images. However, the system does not teach storing data on the magnetic recording layer of APS film. Accordingly, leaving the user unable to record and recover data specific to each roll of film.

In U.S. Patent 5,608,542, a formatted digital index print system and method are taught that customizes index prints. Although information can be stored on the magnetic layer of the film, it does not provide for the storage of high resolution image data. Thus, increasing the time and expense of moving data over the network.

A portable laser scanning workstation is taught, in U.S: Patent 4,369,361. The workstation scans items bearing bar codes. However, the ability to scan APS film and record user information onto the film is not taught by the workstation. Accordingly, leaving the user unable to reproduce and display image data from film.

In U.S. Patent 5,379,368, a method and apparatus is taught for assembling composite images from a plurality of data types. However, the system does not teach scanning APS film to create low resolution images and saving data related to the film back onto the magnetic layer of the film. Accordingly, the system is incapable of storing data on the magnetic layer of the APS film.

A method and apparatus of utilizing a database to assemble a photoalbum is taught, in U.S. Patent 5,563,722. Images and album mats are displayed. The images that are selected are utilized to form album pages. Although the system teaches assembling a photoalbum, it does not allow data to be stored on the magnetic layer of APS film.

In U.S. Patent 5,440,401, an image database incorporating low resolution index image data is taught. Although the system teaches scanning low resolution images, it does not allow indicia that are related to album generation to be stored on the magnetic tracks of APS film.

A photofinishing system is taught, in U.S. Patent 5,218,455, that aids customers in print customization. Although the system teaches scanning high resolution images, it is for 35mm film not APS film, which has magnetic tracks, leaving the user unable to record and recover data, related to film.

In U.S. Patent 5,303,342, a method and apparatus is taught for assembling composite images. However, the system does not teach scanning low resolution images from APS film and saving high resolution data back onto the film. Accordingly, leaving the user unable to store data on the magnetic tracks of APS film.

A photographic printer with a monitor is taught, in U.S. Patent 5,055,941, that displays images for visual inspection. However, the system does not teach using the magnetic layers of APS film to maintain album data. Accordingly, leaving the user unable to store data related to a photoalbum on the film.

In U.S. Patent 5,522,657, an electronic color printing process is taught. Although low resolution images are scanned, storage on the magnetic layers of APS film is not taught. Thus, reducing the efficiency of the system to provide data to the user.

Electronic imaging copiers are taught, in U.S. Patent 4,656,525 and 4,656,524, that scan images and provide them in low and high resolution. However, the copiers do not allow a user to select and store album information on the leader of the APS film. Thus, increasing the amount of time and effort that is spent in arranging a photoalbum.

The recent advent of services, such as KODAK ADVANTIX SYSTEM available from Eastman Kodak Company, have provided users with the capability of scanning APS film into a computer and having images displayed in seconds. It would be desirable to provide a system which allows a user to prepare photoalbums utilizing APS film and provide them with a method of organizing and tracking images on APS film across multiple rolls. The user would retain the APS film where album relationship data would be stored on the magnetic tracks. It would further be desirable to reduce the amount of network connections utilized to transport image data. Although APS film provides the user with an advanced capability over conventional film, the main method for generating APS prints for albums would be similar to what consumers currently utilize to have film and enlargements produced. In view of the foregoing discussion, it should be readily apparent that there remains a need in the art for a system and method that can provide a simple and effective manner of creating photoalbums without requiring large amounts of storage or an extremely fast digital transmission system.

The present invention solves the previously discussed shortcomings within the prior art by providing a process that allows users to organize images from APS film and print these organized images as albums in an efficient manner. The system of the present invention allows the user to preview low resolution images as scanned from the developed film, create a set of relationship data and save the relationship data to the magnetics of the associated APS rolls. The film within the APS rolls is used as high resolution storage for the images. A software application, that is part of the system of the present invention, allows the user to organize the images stored on the APS rolls of film. The application could be a stand alone desk top application or a WEB based system, which could be deployed on home computers, as well as other systems, such as a KODAK PICTURE MAKER KIOSK. The system would allow for albums, which could span multiple APS rolls, and a given APS roll could be part of many albums. Once the organization step is performed and the relationship data is written to the APS magnetic tracks the rolls could be submitted through the standard fulfillment chain (retail, photo-specialty etc) with a request to print a specific album. Additionally, small albums could be fulfilled by taking the rolls composing the album to a Picture Maker Kiosk and having the album pages printed as they wait.
FIG. 1 is a flow chart illustrating the operation of the image organization system;
FIG. 2 is a diagram illustrating the process of writing data to the magnetic tracks of APS film; and
FIG. 3 is a diagram illustrating album paths.

The present invention will be described in the preferred embodiment as a software application. One skilled in the art will recognize that the equivalent of such an application may also be constructed in hardware. Therefore, the present invention may be implemented on any well-known computer system and will not be discussed in detail herein.

The present invention, specifically, highlights the utilization of APS film for organizing photoalbums. APS film, unlike traditional film, has magnetics. The magnetics on the film can provide storage for a wide variety of information for users, such as photofinishers. This invention utilizes the magnetic layer of APS film for storing data related to the organization of images into photoalbums.

A portion of the present invention is implemented via a software application. A software application, which may be stored on a computer readable storage medium, embodies a program of instructions executable by a machine. The computer readable medium may comprise, for example; magnetic storage media such as magnetic disc (such as a floppy disc) or magnetic tape; optical storage media such as optical disc, optical tape, or machine readable bar code; solid state electronic storage devices such as random access memory (RAM), or read only memory (ROM); or any other physical device or medium employed to store a computer program.

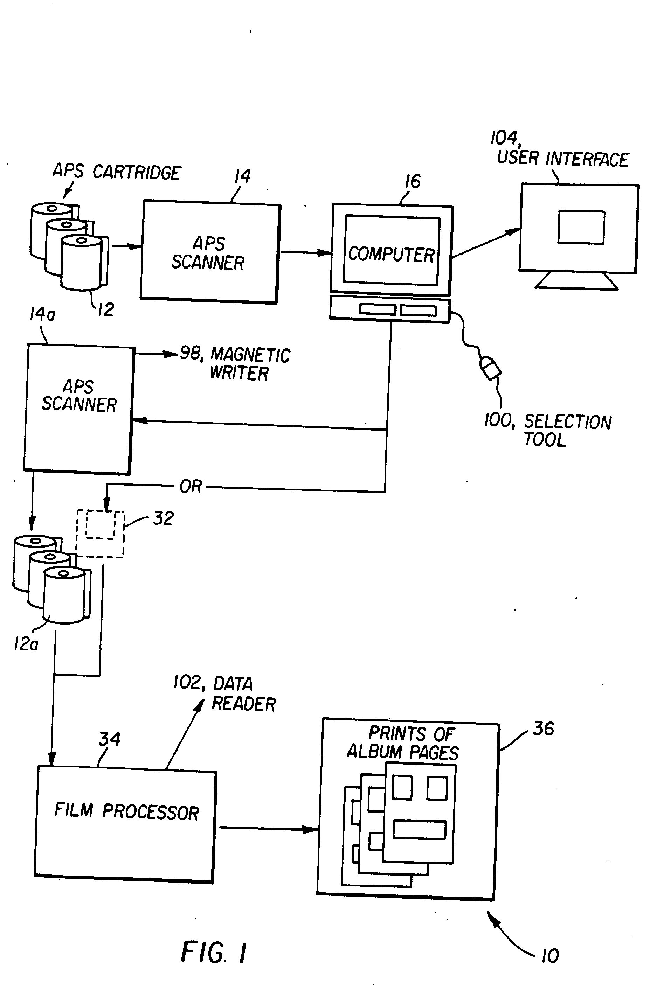

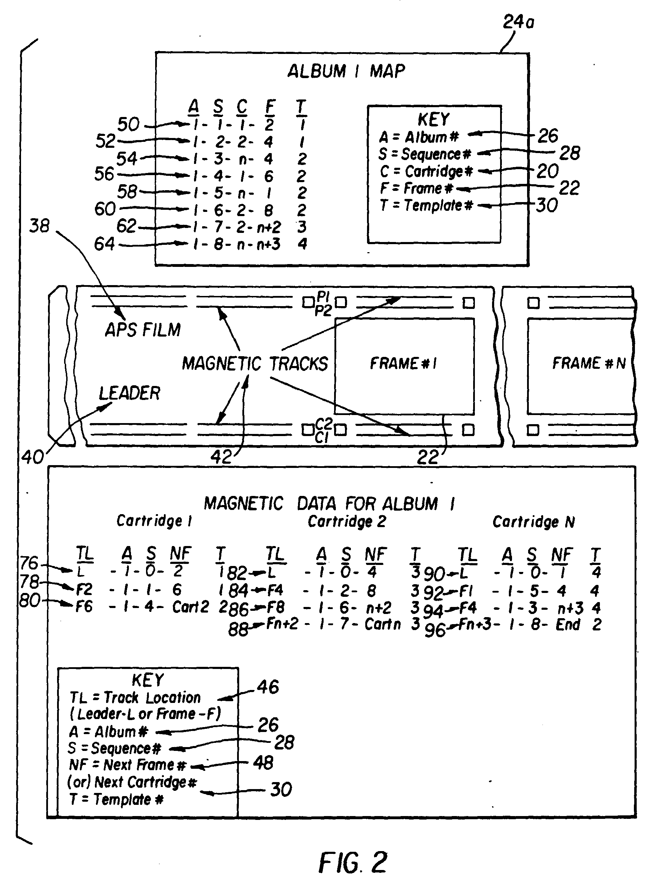

In the present invention, Figure 1 illustrates an APS image management system 10. An APS scanner 14 completes a first step of scanning APS processed film 38, more clearly shown in Figure 2, and producing a low resolution, approximately 100-kilobyte or smaller digital image file for each frame on a roll of developed or nondeveloped APS film 12. The first scanning step provides the APS scanner 14 with the ability to read low resolution data, camera information, titles and captions. Scanning can be accomplished by utilizing a home based consumer grade scanner, such as the KODAK (DUDE) APS scanner, or in the wholesale process as each roll of film is developed. In the case of the home based system, the low-resolution image data could exist on the hard-drive of a desktop home computer or be uploaded to a central storage site on the internet, such as the KODAK PICTURE NETWORK. The low-resolution image data could also be uploaded to the KODAK PICTURE NETWORK, in the case of wholesale in-line scanning.

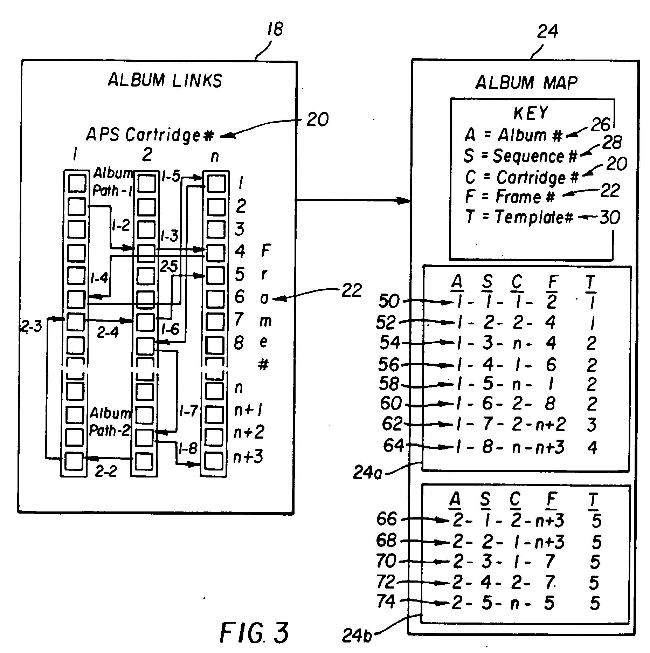

In either case, a software albuming application 16 allows the user to organize low resolution images into albums and produce the relationship information (album links 18), which would finally be written to the magnetic tracks 42, which are storage areas on the APS film, that are more clearly shown in Figure 2. More specifically, the software would allow the user via a selection tool 100 to select the images, which are displayed on a user interface 104, and templates they wanted to include in an album. An album link 18, as illustrated in Figure 3, would determine the organizational pathway, which is a placement algorithm, of rolls of film for a specific album. The album link 18 would consist of grouping together roll ID (cartridge number 20) and associated digital representations of the images (frame number 22) composing that roll. The album links 18 would be processed to produce an album map 24, as illustrated in Figure 3, for each roll 12 for a given album. The album map 24 would provide a layout of each individual album. The layout of each individual album would consist of a variety of categories: album number 26, sequence number 28, cartridge number 20, frame number 22 and a template information number 30 (configuration of a predetermined sequence of images on a page by page basis). The album map 24 could be recorded onto a primary (APS roll of film 12) or alternate storage site 32, such as a floppy, CD or etc. The APS scanner 14a via a magnetic writer 98 could write magnetic indicia, such as titles and captions, and record image edits and album maps 24, in a specific manner to the APS magnetics, which would take into consideration efficiency and the limited amount of data space available on the magnetic tracks 42 of the film.

Figure 3 illustrates, in more depth, the composition of an album map 24. Album maps 24a and 24b illustrate the unique composition of two distinct albums. Album paths 50, 52, 54, 56, 58, 60, 62, 64, 66, 68, 70, 72 and 74 describe each distinct pathway of album maps 24a and 24b. The first column describes the album number 26. The second column describes the sequence number 28. The third column describes the cartridge number 20. The fourth column describes the frame number 22 and the fifth column describes the template (or page layout) information number 30. The template information number 30 defines the layout of the page, including the number of images per page, the size and aspect ratio of each opening used to hold images on a page. The template information number 30 is a system wide parameter that is known to application software that is associated with the system, including print and album layouts. Additionally, the template information number 30 defines where text that is associated with an image is to be placed. The system then recognizes text information that is associated with a particular template and defines the font size, style and location. For example, album path 50 describes one of many paths for album number one. Album path 50 is also the first frame sequence in album one. The images for album path 50 are obtained from cartridge number one. The frame that is being utilized from cartridge number one is frame number two. Finally, the template information number 30 that is utilized is number one.

Figure 2 illustrates, in more depth, the process of writing data to APS magnetics. Album map 24 information is preferably written on the magnetic tracks 42 or leader 40. The leader 40, as envisioned by the preferred embodiment, provides references to all the frames 22 on a roll of film 12, as shown in Figure 1, for a specific album. The magnetic data 44 for each album consists of a variety of categories: track location 46 (leader or frame), album number 26, sequence number 28, next frame or cartridge number 48 and template information number 30. The data 44 could be utilized to point to an organizational sequence of frames 22. The last frame in each roll would either point to the next cartridge number 20 or indicate the end of an album. For example, magnetic data 76, 78, 80, 82, 84, 86, 88, 90, 92, 94 and 96 illustrate the unique composition of information stored on each cartridge for album one. Specifically, magnetic data 76, 78 and 80 are stored on cartridge one. Magnetic data 76 describes, in the first column, that the track location 46 is the leader. The second column describes that the album number 26 is one and the sequence number 28, in column three, is zero. The third column describes that the next frame to be utilized is two and the same process is repeated for magnetic data 78 and 80. Finally, the last column describes the template information number 30 that was selected was one.

It should be readily apparent by minimizing the amount of data representing the low resolution versions of the images that uploading the data for a 24 frame or larger roll will be economical both in terms of time and infrastructure resources (network bandwidth). The system of the present invention minimizes the expense involved and offers a significant improvement over the current state of the art. The relationship information could span multiple APS rolls allowing albums to have images from a number of rolls. Images from a specific roll could also be included in many albums. In addition to allowing the user to generate albums, having a system which maintained a record of the low resolution electronic images and mapped them to the high resolution storage areas on APS rolls they originated from would provide an advanced feature for KODAK APS FILM and KODAK PROCESSING. As to details more clearly shown in Figure 1, in order to print an album once the relationship data is written the user would simply present the rolls, which include the album they wish to print to the retailer, where they normally have their film read by a data reader 102 and processed 34, such as a digital minilab, KODAK PICTURE MAKER KIOSKS and traditional processing, and request a print 36 of album number N for example. The main advantage of this system is that the high-resolution image data is stored on the film and does not have to be moved over network connections when printing. Network bandwidth capable of doing this in a timely manner is currently very expensive. An additional advantage of this system to the user is the printing portion of the process is similar to what they currently do to have exposed rolls processed.

## Claims

1. A method of arranging data related to image organization comprising the steps of:
scanning a roll of film having a plurality of frames with a plurality of magnetic tracks associated with each frame and a plurality of magnetic tracks associated with each roll of film;
displaying scanned image data for each frame;
selecting an organizational sequence for at least one set of frames wherein the selected frames from the roll of film could be selected for a plurality of albums; and
storing data on the magnetic tracks that identify at least one selected organizational sequence for at least one set of frames within the roll of film.

2. The method of claim 1 wherein the scanning step further comprises producing low resolution image data from the roll of film.

3. The method of claim 1 wherein the scanning step further comprises scanning individually or any combination of camera information, titles or captions.

4. The method of claim 1 wherein the storing step further comprises storing data individually or any combination on the leader or magnetic tracks.

5. A system for generating photoalbums comprising:
a film scanner that is operatively coupled to a computer;
a software application residing on the computer that is coupled to the scanner to scan images from a roll of film;
a magnetic writer coupled to the computer to write magnetic indicia related to a selected group of images on the roll of film;
a user interface coupled to the scanner, the computer and the magnetic writer that presents a visually discernable version of the images from the roll of film to a computer user; and
a selection tool provided as part of the software application that allows the user to select images presented by the user interface and place, via the magnetic writer, the selected group of images in organizational sequence on magnetic tracks on the roll of film.

6. The system of claim 5 further comprising the selection tool having a placement algorithm capable of placing indicia related to photoalbum composition on to magnetic tracks on the film.

7. The system of claim 6 wherein the placement algorithm identifies one of a set of predetermined templates for each page of a photoalbum.

8. The system of claim 5 wherein the magnetic writer places organizational sequence data on the magnetic tracks.

9. The system of claim 5 wherein a data reader reads data on the film which indicates a predetermined organizational sequence of images that are to be printed.

10. A computer program product for arranging data related to image organization, comprising the steps of:
a.) providing a computational element having a display mechanism, a readable storage device with a software application;
b.) reading a plurality of digitized images into the computational element;
c.) displaying a low resolution version of the digitized image on the display mechanism;
d.) selecting at least one organizational sequence from the digitized images; and
e.) storing data indicative of the selected images on a storage mechanism.
